# EUROPÄISCHE PATENTSCHRIFT

(11) **EP 1 447 246 B1**
(45) Veröffentlichungstag und Bekanntmachung des Hinweises auf die Patenterteilung: **22.03.2006**
(21) Anmeldenummer: 03028324.6
(22) Anmeldetag: 10.12.2003
(51) Int. Cl.: B60D 1/62

(54) **System für ein Kraftfahrzeug zur Übermittlung eines Signals von dem Anhänger zu der Zugmaschine des Kraftfahrzeuges**
System in a vehicle for transmitting a signal from the trailer to the tractor of the vehicle
Dispositif dans un véhicule pour la transmission d'un signal de la remorque au tracteur du véhicule

(30) Priorität: 11.02.2003 DE 10305761
(43) Veröffentlichungstag der Anmeldung: 18.08.2004
(73) Patentinhaber: Continental Aktiengesellschaft, 30165 Hannover (DE)
(72) Erfinder: Doerr, Alfons, Dr., 30163 Hannover (DE)

(56) Entgegenhaltungen:
- WO-A-01/45980
- WO-A-98/16407
- US-A- 5 045 834
- US-A- 5 388 035

## Beschreibung

Die Erfindung betrifft ein System für ein Kraftfahrzeug, das eine Zugmaschine und einen Anhänger enthält, zur Übermittlung eines Signals von dem Anhänger zu der Zugmaschine, das mindestens eine Lichtquelle enthält, die an dem Anhänger derartig befestigt ist, dass das von der Lichtquelle ausgehende Licht über einen Außenrückspiegel der Zugmaschine in den Fahrerbereich der Zugmaschine reflektiert wird. Ein solches system ist aus dem Dokument WO 98/16407 bekannt.

Derartige Systeme werden dazu benutzt, um Signale von dem Anhänger zu der Zugmaschine des Kraftfahrzeuges zu übermitteln. Die Signale können z.B. die Funktion bzw. die Störung unterschiedlicher Systeme des Anhängers, wie z.B. eines ABS- oder eines Reifenluftdrucküberwachungssystemes, anzeigen. Die Übermittlung eines entsprechenden Signals von dem Anhänger zu der Zugmaschine des Kraftfahrzeuges ist nicht ohne Weiteres möglich, da durch die Übermittlung die Verkehrssicherheit nicht beeinträchtigt werden darf. Aus diesem Grunde ist beispielsweise die Übermittlung von akustischen Signalen von dem Anhänger zu der Zugmaschine nicht erlaubt. Grundsätzlich wäre es zwar möglich, zur Übermittlung entsprechender Signale eine elektrische Datenverbindung zwischen dem Anhänger und der Zugmaschine zu nutzen, jedoch ist festzustellen, dass sich entsprechende Normen, mit denen eine solche Übermittlung geregelt werden könnte, noch nicht durchgesetzt haben. Darüber hinaus ist festzustellen, dass eine Nachrüstung mit entsprechenden Systemen älterer bereits im Verkehr befindlicher Fahrzeuge nicht oder nur schwierig möglich wäre. Aus den genannten Gründen ist bereits ein System vorgeschlagen worden, bei dem an der Seite des Anhängers des Kraftfahrzeuges eine Lichtquelle angebracht ist, die Licht in Richtung der Zugmaschine ausstrahlen kann und einen Abstrahlwinkel von ca. 180 ° aufweist. Die Lichtquelle des Systems wird angesteuert, wenn (z.B. zur Anzeige einer Funktionsstörung eines ABS-Systems) ein Signal von dem Anhänger zu der Zugmaschine des Kraftfahrzeuges übermittelt werden soll. Das von der Lichtquelle ausgehende Licht wird über den Rückspiegel der Zugmaschine in den Fahrerbereich reflektiert, so dass der Fahrer durch das Signal informiert und/oder gewarnt ist. Es ist festzustellen, dass derartige Systeme nachzurüsten und funktionstüchtig sind. Mittlerweile sind derartige Systeme jedoch verboten, da auch sie- genau wie Systeme mit akustischen Signalen - die Verkehrssicherheit beeinträchtigen.

Der Erfindung liegt die Aufgabe zu Grunde, ein System für ein Kraftfahrzeug zur Übermittlung eines Signals von dem Anhänger zu der Zugmaschine des Kraftfahrzeuges zu schaffen, mit dem die Übermittlung eines Signals auf einfache Art und Weise ohne Beeinträchtigung der Verkehrssicherheit der übrigen Verkehrsteilnehmer möglich ist.

Gemäß den kennzeichnenden Merkmalen des Anspruchs 1 wird die Aufgabe dadurch gelöst, dass die Lichtquelle einen kegelförmigen Abstrahlwinkel α aufweist, so dass sie einen Lichtstrahl erzeugt, und derartig an dem Anhänger befestigt ist, dass die horizontale Komponente des Lichtstrahles weitgehend in Längsrichtung des Anhängers verläuft.

Der mit der Erfindung erzielte Vorteil ist insbesondere darin zu sehen, dass einerseits die Signalübermittlung auf einfache Art und Weise möglich ist und dass andererseits auf Grund dessen, dass die Lichtquelle einen Lichtstrahl erzeugt, die Verkehrssicherheit der anderen Verkehrsteilnehmer nicht beeinträchtigt ist. So verläuft die horizontale Komponente des Lichtstrahles weitgehend in Längsrichtung des Anhängers und ferner wird der Lichtstrahl über den Rückspiegel der Zugmaschine in den Fahrerbereich der Zugmaschine reflektiert, so dass der von der Lichtquelle ausgehende Lichtstrahl die unmittelbare Umgebung des Kraftfahrzeugesin den allermeisten Fahrsituationen des Kraftfahrzeuges nicht verlässt. Ein weiterer Vorteil der Erfindung ist darin zu sehen, dass auch bereits im Verkehr befindliche Kraftfahrzeuge auf einfache Art und Weise mit dem System nachgerüstet werden können.

Gemäß der Erfindung liegt der kegelförmige Abstrahlwinkel α der Lichtquelle zwischen 1° und 15°, vorzugsweise zwischen 2° und 8°. Der Vorteil dieses Markmals ist darin zu sehen, dass das von der Lichtquelle ausgehende Licht sehr stark zu einem Lichtstrahl gebündelt wird und es somit zu einer starken Ausprägung des Lichtstrahls kommt. Somit ist einer Beeinträchtigung der anderen Verkehrsteilnehmer durch den Lichtstrahl sicher vorgebeugt.

Gemäß einer Weiterbildung der Erfindung nach Anspruch 2 strahlt die Lichtquelle Licht in dem für Menschen sichtbaren Bereich ab (die Wellenlänge des Lichtes beträgt also ca. 350 - 800 nm). Der Vorteil dieser Weiterbildung wird verständlich, wenn man Folgendes berücksichtigt:

Würde die Lichtquelle Licht in einen Wellenlängenbereich abstrahlen, das für das menschliche Auge nicht sichtbar ist, so müsste die Frequenz des Lichtes mit Hilfe von zusätzlichen Hilfsmitteln in den entsprechenden Wellenlängenbereich verschoben werden. Dies könnte beispielsweise mit Hilfe einer Folie geschehen, die auf dem Rückspiegel der Zugmaschine angebracht ist. Hierdurch ließe sich zwar der Vorteil erreichen, dass der Lichtstrahl auf dem Weg von der Lichtquelle bis zu dem Rückspiegel für das menschliche Auge unsichtbar ist, jedoch würde die Folie die Kosten des Systems erhöhen. Mit der Weiterbildung wird also der Vorteil erreicht, dass zusätzliche Mittel, die die Wellenlänge des Lichtes verschieben, nicht notwendig sind.

Gemäß einer Weiterbildung der Erfindung nach Anspruch 3 ist der Abstand der Lichtquelle zum Untergrund, auf dem das Fahrzeug steht, kleiner als der Abstand des Rückspiegels zum Untergrund. Mit dieser Weiterbildung wird der Vorteil erreicht, dass der Lichtstrahl unter einem Abstrahlwinkel β zur Horizontalen von der Lichtquelle zu dem Rückspiegel der Zugmaschine ausstrahlt. Falls also der Lichtstrahl in bestimmten Situationen (z.B. während einer Kurvenfahrt des Kraftfahrzeuges) nicht auf den Rückspiegel der Zugmaschine trifft, strahlt er z.B. über entgegenkommende Kraftfahrzeuge hinweg, so dass auch in diesem Fall die Verkehrssicherheit anderer Verkehrsteilnehmer nicht beeinträchtigt ist.

Gemäß einer Weiterbildung nach Anspruch 4 liegt der Abstrahlwinkel β des Lichtstrahls zur Horizontalen zwischen 10° und 50°, vorzugsweise zwischen 15° und 30.

Gemäß einer Weiterbildung der Erfindung nach Anspruch 5 list die Lichtquelle in einen Körper eingebettet, wobei von der Lichtquelle ein (in dem Körper befindlicher) kegelförmiger Kanal ausgeht, der in der Oberfläche des Körpers endet. Der Vorteil dieser Weiterbildung ist darin zu sehen, dass mit Hilfe des kegelförmigen Kanals in dem Körper die Ausbildung eines Lichtstrahles, der von der Lichtquelle ausgeht, auf einfache Art und Weise möglich ist. Hierzu braucht nämlich der kegelförmige Kanal lediglich einen Kegelwinkel α gemäß dem Anspruch 2 aufzuweisen.

Gemäß einer Weiterbildung der Erfindung nach Anspruch 6 steht der kegelförmige Kanal in dem Körper mit einem Abflusskanal in Verbindung. Durch den Abflusskanal kann Feuchtigkeit, die sich in dem Körper (z.B. bei Regen) ansammelt, nach außen abgeführt werden, so dass einer Beschädigung und einer Verschmutzung der Lichtquelle durch Feuchtigkeit sicher vorgebeugt ist.

Gemäß einer Weiterbildung der Erfindung nach Anspruch 7 ist der kegelförmige Kanal in dem Körper zumindest teilweise mit einem für das von der Lichtquelle ausgestrahlten durchlässigen Material gefüllt. Durch diese Weiterbildung wird der Vorteil erreicht, dass keine Feuchtigkeit und kein Schmutz bis zu der Lichtquelle in den Körper vordringen kann. Die Weiterbildung gemäß Anspruch 8 kann zusätzlich oder alternativ zu der Weiterbildung gemäß Anspruch 7 vorgesehen werden.

Gemäß einer Weiterbildung der Erfindung nach Anspruch 8 ist die Lichtquelle eine Leuchtdiode. Mit dieser Weiterbildung wird der Vorteil erreicht, dass die Lichtquelle bereits Licht in Form eines Lichtstrahles ausstrahlt, der ggf. durch einen Kanal in dem Körper nochmals gebündelt wird.

Gemäß einer Weiterbildung der Erfindung nach Anspruch 9 weist das System mehrere Lichtquellen auf, die Licht jeweils unterschiedlicher Wellenlänge (vorzugsweise jeweils einer Wellenlänge in für Menschen sichtbaren Bereich) ausstrahlen. Der Vorteil dieser Weiterbildung ist darin zu sehen, dass mit Hilfe mehrerer Lichtquellen mehrere Systeme des Anhängers auf ihre Funktionalität überwacht werden können oder aber mit Hilfe der mehreren Lichtquellen unterschiedliche Fehler oder Schwellen innerhalb eines System angezeigt werden können. So ist es beispielsweise möglich, innerhalb eines Reifenluftdrucküberwachungssystems mit einer ersten Lichtquelle einen zu hohen Druck in den Reifen und mit einer zweiten Lichtquelle einen zu niedrigen Luftdruck in den Reifen anzuzeigen. Zusätzlich oder alternativ ist es möglich, mit einer ersten Lichtquelle einen ersten Schwellwert und mit einer zweiten Lichtquelle einen zweiten Schwellwert eines zu hohen oder zu niedrigen Luftdruckes anzuzeigen.

Gemäß einer Weiterbildung der Erfindung nach Anspruch 10 ist die mindestens eine Lichtquelle an der der Zugmaschine zugewandten Stirnfläche des Anhängers befestigt. Die Vorteile dieser Weiterbildung sind darin zu sehen, dass die Lichtquelle einerseits geschützt und andererseits nahe zu dem Rückspiegel der Zugmaschine an dem Anhänger befestigt ist.

Ein Ausführungsbeispiel und weitere Vorteile der Erfindung werden im Zusammenhang mit den nachstehenden Figuren erläutert, darin zeigen:
- Figur 1: ein Kraftfahrzeug mit einem erfindungsgemäßen System,
- Figur 2: einen vergrößerten Ausschnitt aus der Figur 1 in Form eines Körpers, in den Lichtquellen integriert sind,
- Figur 3: eine Draufsicht auf den in der Figur 2 gezeigten Körper.

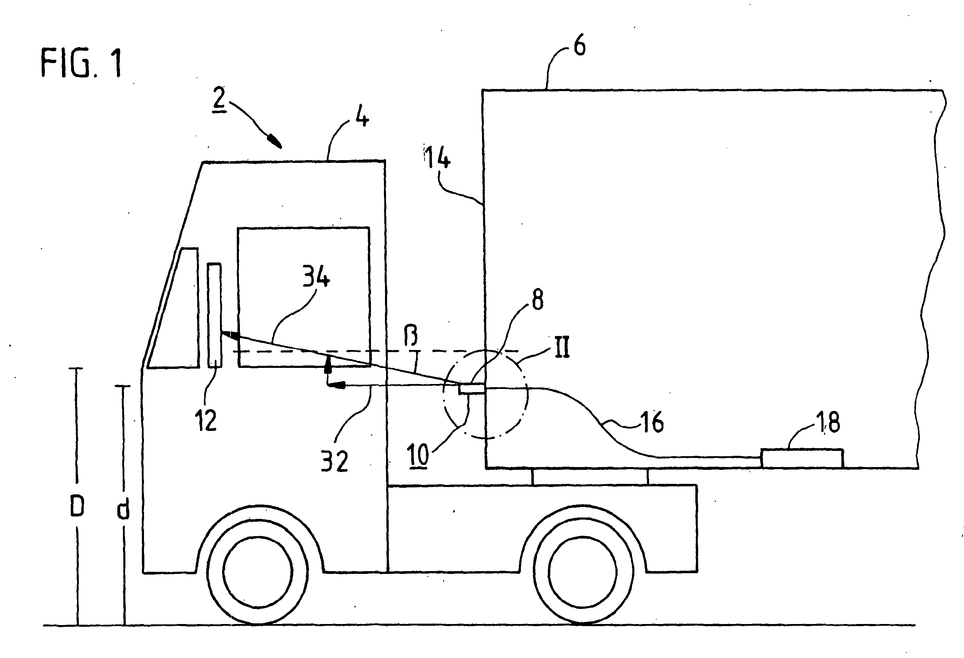

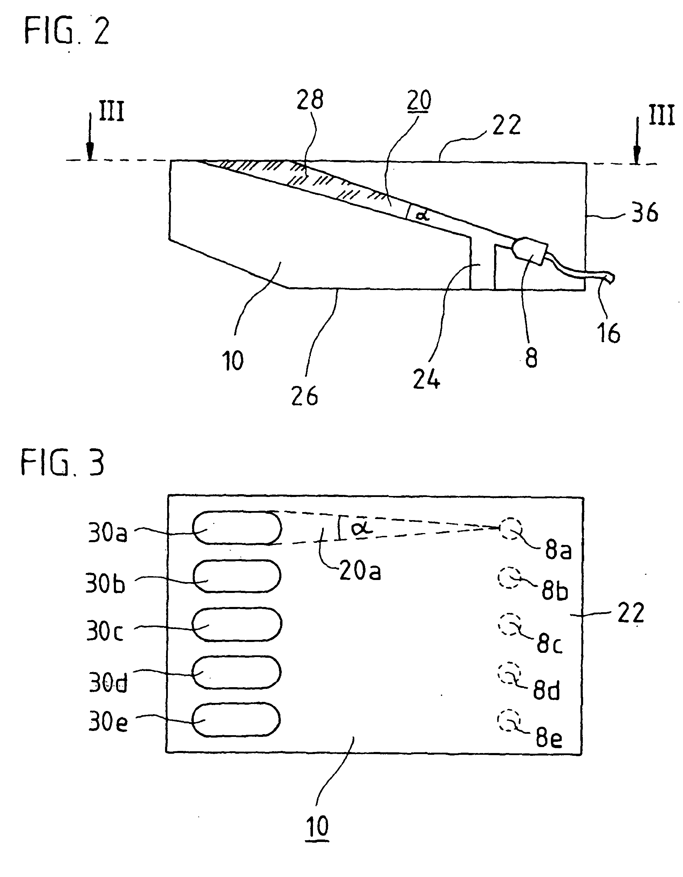

Figur 1 zeigt in stark schematisierter Darstellung ein Kraftfahrzeug 2 mit einer Zugmaschine 4 und einem Anhänger 6. Das Kraftfahrzeug 2 enthält ein System zur Übermittlung eines Signals von dem Anhänger zu der Zugmaschine, das mindestens eine Lichtquelle 8 in Form einer Leuchtdiode enthält (Näheres siehe auch Figuren 2 und 3). Die Lichtquelle 8 befindet sich innerhalb eines Körpers 10, der an dem Anhänger 6 derartig befestigt ist, dass das von der Lichtquelle 8 ausgehende Licht über den fahrerseitigen Außenrückspiegel 12 der Zugmaschine 4 in den Fahrerbereich der Zugmaschine reflektiert wird. Der Körper 10 ist an der der Zugmaschine 4 zugewandten Stirnfläche 14 des Anhängers 6 befestigt.

Der Abstand d der Lichtquelle 8 zum Untergrund, auf dem das Kraftfahrzeug 2 steht, ist kleiner als der Abstand D der unteren Kante des Rückspiegels 12 zum Untergrund. Die Lichtquelle 8 ist derartig an dem Anhänger 6 befestigt, dass der von der Lichtquelle ausgehende Lichtstrahl 34 zur Horizontalen einen Abstrahlwinkel β aufweist, der zwischen 10° und 50°, vorzugsweise zwischen 15° und 30°, liegt. Die horizontale Komponente 32 des Lichtstrahles 34, der von der Lichtquelle 8 erzeugt wird, verläuft weitgehend in der Längsrichtung des Anhängers 6 und ist auf die Zugmaschine 2 gerichtet. Das von der Lichtquelle 8 ausgestrahlte Licht weist eine Wellenlänge im für Menschen sichtbaren Bereich auf.

Der Körper 10, in den die Lichtquelle 8 eingebettet ist (Näheres siehe Figuren 2 und 3), steht über eine elektrische Leitung 16 mit dem Steuergerät 18 des Anhängers 6 in Verbindung. Ausgehend von dem Steuergerät 18 wird die Lichtquelle 8 über das elektrische Kabel 16 mit Spannung versorgt. Darüber hinaus wird die Lichtquelle 8 über das Kabel 16 von dem Steuergerät 18 angesteuert, wenn durch die Lichtquelle 8 ein Signal von dem Anhänger 6 zu der Zugmaschine 4 übermittelt werden soll.

Figur 2 zeigt den in der Figur 1 gezeigten Körper 10 im Querschnitt und in vergrößerter Darstellung. Der Figur 2 ist zu entnehmen, dass die Lichtquelle in Form einer Leuchtdiode 8 in den Körper 10 eingebettet ist. Von der Spitze der Leuchtdiode 8 führt ein kegelförmiger Kanal in Form einer Bohrung 20 zu der nach oben gewandten Oberfläche 22 des Körpers 10. Die kegelförmige Bohrung 20 weist einen Öffnungswinkel α auf, der zwischen 1° und 15°, vorzugsweise zwischen 2° und 8°, liegt, so dass das von der Leuchtdiode 8 ausgehende Licht durch die kegelförmige Bohrung 20 zu einem Lichtstrahl gebündelt wird. Die kegelförmige Bohrung 20 steht mit einem Abflusskanal in Form einer Abflussbohrung 24 in Verbindung, deren Austrittsöffnung in der Oberfläche 22 der gegenüberliegenden Oberfläche 26 des Körpers 10 liegt. Durch die Abflussbohrung 24 kann in die kegelförmige Bohrung 20 eindringende Feuchtigkeit abgeleitet werden. Alternativ oder zusätzlich ist es möglich, die kegelförmige Bohrung zumindest teilweise mit einem für das von der Leuchtdiode 8 ausgestrahlten lichtdurchlässigen Material 28 zu füllen. Die seitliche Oberfläche 36 des Körpers 10 wird mit der Stirnfläche 14 des Anhängers 6 (s. Fig. 1) verbunden.

Figur 3 zeigt eine Draufsicht auf den in der Figur 2 gezeigten Körper 10. Der Figur 3 ist zu entnehmen, dass in den Körper 10 mehrere Leuchtdioden 8a - 8e eingebettet sind, die jeweils Licht mit einer für Menschen sichtbaren Wellenlänge abstrahlen. Hierbei ist die Wellenlänge für jede der Leuchtdioden 8a - 8e unterschiedlich gewählt, so dass unterschiedliche Farben bzw. Farbstufen abgestrahlt werden. Jede Leuchtdiode 8a - 8e steht mit einer kegelförmigen Bohrung 20a - 20e in Verbindung, die jeweils in einer Austrittsöffnung 30a - 30e in der Oberfläche 22 des Körpers 10 münden.

Die Leuchtdioden 8a - 8e können zur Übermittlung unterschiedlicher Signale von dem Anhänger 6 zu der Zugmaschine 4 (siehe Fig. 1) genutzt werden. So können beispielsweise die Leuchtdioden 8a - 8d innerhalb eines Reifenluftdrucküberwachungssystems genutzt werden. In diesem Fall kann beispielsweise die Leuchtdiode 8a mit einer ersten Farbe einen um mindestens 1 bar erhöhten Luftdruck in einem der Reifen anzeigen. Die Leuchtdiode 8b kann mit Hilfe einer zweiten Farbe ein um 0,5 bar bis 1 bar erhöhten Luftdruck in einem Reifen anzeigen. Die Leuchtdiode 8c kann mit einer dritten Farbe einen um 0,5 bar bis 1 bar erniedrigten Luftdruck in einem Reifen und die Leuchtdiode 8d mit einer vierten Farbe den um mindestens 1 bar erniedrigten Luftdruck in einem Reifen (jeweils bezogen auf einen festgelegten Normalluftdruck) anzeigen. Mit der Hilfe der Leuchtdiode 8e kann mit einer fünften Farbe beispielsweise eine Funktionsstörung innerhalb eines ABS-Systems oder eines weiteren Systems angezeigt werden.

### Bezugszeichenliste

### (Teil der Beschreibung)

- 2: Kraftfahrzeug
- 4: Zugmaschine
- 6: Anhänger
- 8: Lichtquelle
- 10: Körper
- 12: Rückspiegel
- 14: Stirnfläche
- 16: elektrisches Kabel
- 18: Steuergerät
- 20: kegelförmiger Kanal
- 22: Oberfläche
- 24: Abflusskanal
- 26: Oberfläche
- 28: Material
- 30: Austrittsöffnung
- 32: horizontale Komponente
- 34: Lichtstrahl
- 36: Oberfläche

## Patentansprüche

1. System für ein Kraftfahrzeug (2), das eine Zugmaschine (4) und einen Anhänger (6) enthält, zur Übermittlung eines Signals von dem Anhänger (6) zu der Zugmaschine (4), das mindestens eine Lichtquelle (8) enthält, die an dem Anhänger (6) derartig befestigt ist, dass das von der Lichtquelle (8) ausgehende Licht über einen Außenrückspiegel (12) der Zugmaschine (4) in den Fahr bereich der Zugmaschine reflektiert wird, **dadurch gekennzeichnet, dass** die Lichtstrahl erzeugende Lichtquelle (8) einen kegelfönnigen Abstrahlwinkel α aufweist, der zwischen 1° und 15°, vorzugsweise zwischen 2° und 8°, liegt, und derartig an dem Anhänger (6) befestigt ist, dass die horizontale Komponente des Lichtstrahles weitgehend in Längsrichtung des Anhängers (6) verläuft.

2. System nach einem der Anspruch, **dadurch gekennzeichnet, dass** die Lichtquelle (8) Licht im für Menschen sichtbaren Bereich abstrahlt.

3. System nach einem der Ansprüche 1 bis 2, **dadurch gekennzeichnet, dass** der Abstand der Lichtquelle (8) zum Untergrund, auf dem das Fahrzeug (2) steht, kleiner ist als der Abstand des Rückspiegels (12) zum Untergrund.

4. System nach Ansprüche 1 bis 3, **dadurch gekennzeichnet, dass** der die Lichtquelle (8) derartig an dem Anhänger (6) befestigt ist, dass der Abstrahlwinkel β des Lichtstrahles zur Horizontalen zwischen 10° und 50°, vorzugsweise zwischen 15° und 30°, liegt.

5. System nach einem der Ansprüche 1 bis 4, **dadurch gekennzeichnet, dass** die Lichtquelle (8) in einen Körper (10) eingebettet ist und von der Lichtquelle (8) ein kegelförmiger Kanal (20) ausgeht, die in einer Oberfläche (22) des Körpers (10) endet.

6. System nach Anspruch 5, **dadurch gekennzeichnet, dass** der kegelförmige Kanal (20) mit einem Abflusskanal (24) in Verbindung steht.

7. System nach einem der Ansprüche 5 bis 6, **dadurch gekennzeichnet, dass** der kegelförmige Kanal (20) zumindest teilweise mit einem für das von der Lichtquelle (8) ausgestrahlten Licht durchlässigen Material (28) gefüllt ist.

8. System nach einem der Ansprüche 1 bis 7, **dadurch gekennzeichnet, dass** die Lichtquelle (8) eine Leuchtdiode ist.

9. System nach einem der Ansprüche 1 bis 8, **dadurch gekennzeichnet, dass** das System mehrere Lichtquellen (8a - 8e) aufweist, die Licht jeweils unterschiedlicher Wellenlänge ausstrahlen.

10. System nach einem der Ansprüche 1 bis 9, **dadurch gekennzeichnet, dass** die mindestens eine Lichtquelle (8) an der der Zugmaschine (4) zugewandten Stirnfläche (14) des Anhängers (6) befestigt ist.

## Claims

1. System for a motor vehicle (2) which contains a tractive unit (4) and a trailer (6), for transmitting a signal from the trailer (6) to the tractive unit (4) which contains at least one light source (8) which is mounted on the trailer (6) in such a way that the light which is output by the light source (8) is reflected by an exterior rear view mirror (12) of the tractive unit (4) into the driver's area of the tractive unit, **characterized in that** the light-beam-generating light source (8) has a conical emission angle α, that is between 1° and 15°, preferably between 2° and 8°, and is attached to the trailer (6) in such a way that the horizontal component of the light beam extends largely in the longitudinal direction of the trailer (6).

2. System according to Claim 1, **characterized in that** the light source (8) emits light in the range which is visible to humans.

3. System according to one of Claims 1 to 2, **characterized in that** the distance between the light source (8) and the underlying surface on which the vehicle (2) is standing is smaller than the distance between the rear view mirror (12) and the underlying surface.

4. System according to Claims 1 to 3, **characterized in that** the light source (8) is attached to the trailer (6) in such a way that the emission angle P of the light beam with respect to the horizontal is between 10° and 50°, preferably between 15° and 30°.

5. System according to one of Claims 1 to 4, **characterized in that** the light source (8) is embedded in a body (10) and a conical duct (20) starts from the light source (8) and ends in a surface (22) of the body (10).

6. System according to Claim 5, **characterized in that** the conical duct (20) is connected to a discharge duct (24).

7. System according to one of Claims 5 to 6, **characterized in that** the conical duct (20) is filled at least partially with a material (28) which is transparent to the light irradiated by the light source (8).

8. System according to one of Claims 1 to 7, **characterized in that** the light source (8) is a light-emitting diode.

9. System according to one of Claims 1 to 8, **characterized in that** the system has a plurality of light sources (8a - 8e) which irradiate light at respective different wavelengths.

10. System according to one of Claims 1 to 9, **characterized in that** the at least one light source (8) is attached to the end face (14) of the trailer (6) which faces the tractive unit (4).

## Revendications

1. Système pour véhicule automobile (2) qui comporte un tracteur (4) et une remorque (6), visant à transmettre un signal de la remorque (6) au tracteur (4) et comprenant au moins une source de lumière (8) fixée à la remorque (6) de façon à ce que la lumière provenant de la source de lumière (8) soit réfléchie dans le champ de vision du conducteur du tracteur par un rétroviseur extérieur (12) du tracteur (4), **caractérisé en ce que** la source de lumière (8) présente un angle de rayonnement conique α compris entre 1 et 15°, de préférence entre 2 et 8° et est fixée à la remorque (6) de telle manière que la composante horizontale du rayonnement lumineux s'étend largement dans le sens de la longueur de la remorque (6).

2. Système selon l'une des revendications, **caractérisé en ce que** la source de lumière (8) émet de la lumière visible à l'oeil humain.

3. Système selon l'une des revendications 1 à 2, **caractérisé en ce que** la distance entre la source de lumière (8) et le sol sur lequel se trouve le poids lourd est plus court que la distance entre le rétroviseur (12) et le sol.

4. Système selon les revendications 1 à 3, **caractérisé en ce que** la source de lumière (8) est fixée à la remorque (6) de telle sorte que l'angle de rayonnement β par rapport à l'horizontale est compris entre 10 et 50°, de préférence entre 15 et 30°.

5. Système selon l'une des revendications 1 à 4, **caractérisé en ce que** la source de lumière (8) est incorporée dans un corps (10) et **en ce qu'**un canal conique (20) qui se termine sur une surface (22) du corps (10) est émis par la source de lumière (8).

6. Système selon la revendication 5, **caractérisé en ce que** le canal conique (20) est relié à un canal d'évacuation (24).

7. Système selon l'une des revendications 5 à 6, **caractérisé en ce que** le canal conique (20) est rempli au moins en partie d'un matériau (28) transparent à la lumière émise par la source de lumière (8).

8. Système selon l'une des revendications 1 à 7, **caractérisé en ce que** la source de lumière (8) est une diode.

9. Système selon l'une des revendications 1 à 8, **caractérisé en ce que** le système présente plusieurs sources de lumière (8a - 8e) qui émettent de la lumière de différentes longueurs d'ondes.

10. Système selon l'une des revendications 1 à 9, **caractérisé en ce qu'**au moins une source de lumière (8) est fixée sur la surface frontale (14), tournée vers le tracteur (4), de la remorque (6).
